# FASCICULE DE BREVET EUROPEEN

(11) **EP 3 554 805 B1**
(45) Date de publication et mention de la délivrance du brevet: **01.02.2023**
(21) Numéro de dépôt: 17826265.5
(22) Date de dépôt: 11.12.2017
(51) Int. Cl.: B29C 70/32, B29C 70/86, F01D 25/24, F41H 5/04, B32B 15/14

(54) **PROCÉDÉ DE FABRICATION D'UNE CARTOUCHE DE BLINDAGE D'UN ÉLÉMENT DE TURBOMACHINE ET CARTOUCHE DE BLINDAGE ET ÉLÉMENT DE TURBOMACHINE CORRESPONDANTS**
VERFAHREN ZUR HERSTELLUNG EINER ABSCHIRMUNGSKARTUSCHE FÜR EIN TURBOMASCHINENELEMENT SOWIE ZUGEHÖRIGE ABSCHIRMUNGSKARTUSCHE UND TURBOMASCHINENELEMENT
METHOD FOR PRODUCING A SHIELDING CARTRIDGE FOR A TURBOMACHINE ELEMENT AND CORRESPONDING SHIELDING CARTRIDGE AND TURBOMACHINE ELEMENT

(30) Priorité: 14.12.2016 FR 1662465
(43) Date de publication de la demande: 23.10.2019
(73) Titulaire: Safran Helicopter Engines, 64510 Bordes (FR)
(72) Inventeur: MEZIERE, Ludovic, 77550 Moissy-Cramayel (FR)
(74) Mandataire: Gevers & Orès
(86) Numéro de dépôt international: PCT/FR2017/053492
(87) Numéro de publication internationale: WO 2018/109343

(56) Documents cités:
- WO-A1-2011/040915
- GB-A- 2 159 886

## Description

### 1. Domaine de l'invention

La présente invention concerne le domaine de la protection des turbomachines, en particulier, mais non exclusivement des turbomachines aéronautiques. Elle vise en particulier un procédé de fabrication d'une cartouche de blindage d'un élément de turbomachine nécessitant une protection contre la libération haute énergie de pièces ou composants ou de morceaux et débris de ces dits éléments en rotation de la turbomachine susceptibles de se détacher. Elle vise également une cartouche de blindage et un élément de turbomachine équipé d'une telle cartouche de blindage.

### 2. Etat de la technique

Les turbomachines aéronautiques sont équipées de nombreux organes rotatifs qui tournent à des vitesses de rotation élevées. Ces organes rotatifs peuvent être des organes à aubages tels que des compresseurs ou des turbines qui comprennent des aubes solidaires d'un disque. Ces aubes rapportées ou non sur le disque par assemblage mécanique ou métallurgique sont susceptibles de défaillance voire de rupture lors de la rotation de ces organes. La rupture ou la défaillance de ces organes rotatifs tournant à hautes vitesses engendrerait des débris et des fragments éjectés à hautes énergies capables de traverser, par exemple, des carters de la turbomachine ce qui provoquerait des dégâts considérables dans la turbomachine et à l'extérieur de celle-ci. La rupture de certains fragments peut aussi intervenir de manière volontaire et décidée lors de la conception. En effet, il est possible d'aménager des zones fusibles par exemple sur des aubes de manière à créer une rupture volontaire et contrôlée de celle-ci en cas de survitesse de la turbomachine pour se protéger d'un éclatement du disque. Les organes à aubages rotatifs comprennent généralement plusieurs dizaines d'aubes capables de libérer si elles devaient se rompre une énergie considérable difficile à absorber et à contenir.

Les règlementations aéronautiques exigent que tout débris ou fragment potentiel haute énergie soit contenu et confiné au sein de la turbomachine afin d'éviter tout dommage à l'extérieur de celle-ci.

Il est ainsi connu d'aménager des systèmes de protection sur des éléments de la turbomachine pour confiner et contenir les débris et fragments possibles. Un exemple de système de protection comprend un blindage épais fixé à un carter s'étendant autour de l'organe rotatif. Ce blindage est réalisé généralement en titane ou en acier pour des compresseurs relativement froids et en alliage à base nickel pour des turbines dans des environnements dont la température excède les 500°C. Un exemple de blindage est connu du document de brevet FR-A1-2964145. Cependant, ce blindage présente une masse passive qui pénalise les performances de la turbomachine. En effet, la masse de ce blindage peut représenter jusqu'à 7 % de la masse de la turbomachine. C'est une masse aménagée en prévention qui ne participe pas à la performance de la turbomachine autrement qu'en assurant une exigence de sécurité. D'autres blindages en Kevlar^{®} qui sont généralement utilisés au droit des soufflantes de turbomachine ou de premiers étages de compresseur, restent limités à des températures inférieures à 500°C et ont un coût élevé. Ces blindages sont ainsi sensibles à la température environnante. Ces blindages sont également sujets à la corrosion et à l'oxydation qui diminuent la capacité intrinsèque de rétention du matériau en le fragilisant. Un système de protection est également connu du document WO-A1-2011/040915. Toutefois, son procédé de fabrication est encore long et coûteux et les matériaux utilisés, notamment pour le boîtier comprenant des stratifiés, ne permettent pas une tenue aux températures élevées.

Le document GB2159886A divulgue un blindage pour turbomachine comprenant des bandes tissés. 11

### 3. Objectif de l'invention

La présente invention a notamment pour objectif de fournir une cartouche de blindage permettant de protéger des éléments de la turbomachine de débris et fragments et d'absorber leur énergie tout en évitant de pénaliser la masse de la turbomachine.

### 4. Exposé de l'invention

On parvient à réaliser cet objectif, conformément à l'invention grâce à un procédé selon la revendication 1 de fabrication d'une cartouche de blindage d'un élément de turbomachine.

Ainsi, cette solution permet d'atteindre l'objectif susmentionné. En particulier, ce procédé simple et peu coûteux permet de fournir une cartouche de blindage particulièrement légère supportant des températures élevées telles que 500°C et de garantir la pérennité et la tenue des propriétés mécaniques de la cartouche de blindage. La fermeture du boîtier par un couvercle permet également de garantir l'étanchéité du boîtier et de ne pas exposer le fil de carbone à l'environnement extérieur.

Nous entendons dans la présente invention par l'expression « emprisonnement et préservation » le fait de maintenir et contenir le fil de carbone enroulé à l'intérieur du boîtier étanche et de préserver le fil de carbone de l'environnement extérieur pour éviter son oxydation ou encore sa corrosion.

De manière avantageuse, mais non limitativement, l'étape de fermeture du boîtier par le couvercle est réalisée par un soudage sous vide ou sous atmosphère neutre non oxydante de sorte à isoler de manière pérenne le fil de carbone de l'environnement extérieur et notamment de l'oxydation.

L'invention concerne également une cartouche de blindage d'un élément de turbomachine selon la revendication 4. La configuration de cette cartouche permet de manière efficace et pérenne, d'une part de résister au cisaillement et à la déformation et, d'autre part de résister à des températures élevées. Une telle cartouche simple de conception permet également un gain en masse pouvant atteindre au moins 3 à 4 fois la masse des blindages d'une turbomachine de l'art antérieur. A cela s'ajoute le fait que cette cartouche de blindage est peu coûteuse à fabriquer sans interface ou liaison carbone-métal particulière à aménager aux extrémités du fil enroulé. Enfin, le matériau du boîtier et du couvercle permet d'obtenir une cartouche légère avec une capacité à délocaliser les chocs par une bonne tenue à la perforation et au cisaillement, ainsi qu'une bonne résistance aux températures élevées, soit au moins 500°C.

Selon une caractéristique de l'invention, le fil est enroulé de manière à former une pluralité de spires de fibres enroulées et serrées les unes aux autres de sorte à accroître les performances mécaniques de la cartouche.

Selon encore une autre caractéristique de l'invention, les fibres comprennent un polyacrylonitrile. Les fibres réalisées en polyacrylonitrile possèdent une résistance mécanique en traction et un module élastique élevées selon le traitement permettant d'obtenir ces fibres.

Suivant une autre caractéristique de l'invention, le fil enroulé comprend en section longitudinale entre 15000 et 25000 fibres par mm².

De manière avantageuse, mais non limitativement, le fil comprend deux extrémités libres dans le boîtier. Une telle configuration permet d'éviter qu'il y ait une liaison mécanique entre le fil enroulé et le boîtier qui pourrait engendrer un délaminage des fibres du fil.

L'invention concerne également un élément de turbomachine équipé d'une cartouche de blindage présentant l'une quelconque des caractéristiques susmentionnées.

En particulier, un élément de turbomachine pourrait comprendre un carter. L'invention concerne encore une turbomachine comprenant au moins un élément susmentionné.

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés.

### Sur ces dessins :

La figure 1 représente schématiquement en coupe axiale un exemple de cartouche de blindage d'un élément de turbomachine conforme à l'invention ;
La figure 2 illustre de manière schématique un élément de turbomachine équipé d'une cartouche de blindage selon l'invention ;
La figure 3 représente de manière schématique un fil enroulé ;
Les figure 4a et 4b sont des vues en perspective d'une cartouche et en coupe axiale de la cartouche montée sur un élément de turbomachine suivant un autre exemple de réalisation ; et,
La figure 5 représente un logigramme conforme au procédé de l'invention.

### 6. Description de modes de réalisation de l'invention

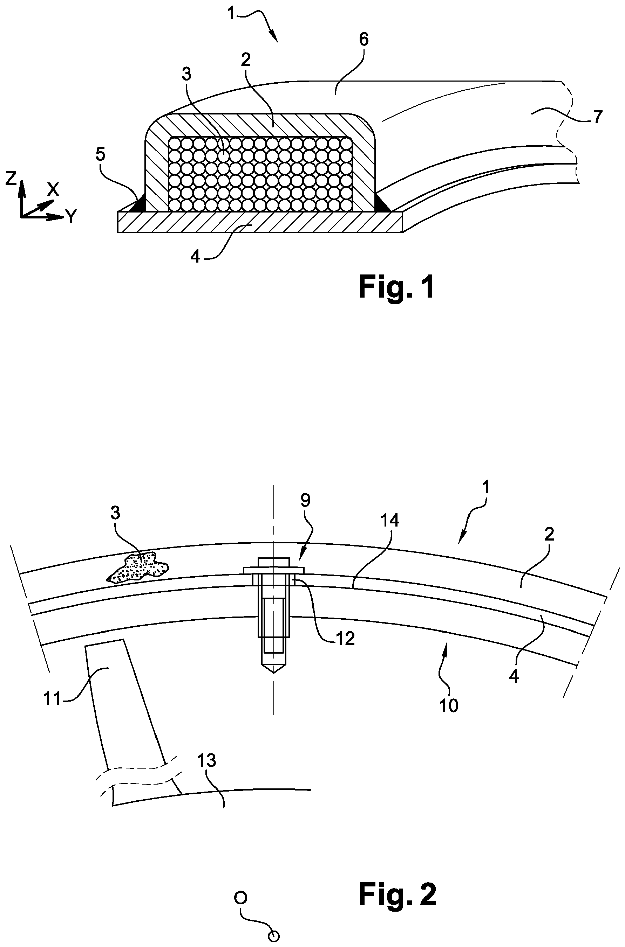

Sur la figure 1 est représentée partiellement et en coupe axiale une cartouche de blindage 1 selon l'invention. Cette cartouche de blindage 1 est destinée à équiper un élément de turbomachine tel qu'un carter disposé en vis-à-vis d'un organe à aubages rotatif. Un tel organe à aubages rotatif peut être un rotor de compresseur, de turbine ou encore de soufflante.

La cartouche de blindage 1 comprend un boîtier 2 ou une gouttière allongée suivant un axe X longitudinal. Est également représenté sur la figure 1, un axe Y transversal perpendiculaire à l'axe X et un axe Z, ici vertical perpendiculaire aux axes X et Y. Ces axes X, Y, Z définissent un repère orthonormé. Dans le boîtier 2 est emprisonné et préservé de l'environnement extérieur un fil 3 enroulé. Le fil 3 enroulé est emprisonné dans le présent exemple au moyen d'un couvercle 4 fixé au boîtier 2. Le couvercle 4 permet ainsi de fermer le boîtier 2 de manière étanche et de préserver le fil 3 de carbone de l'environnement extérieur. Comme cela est illustré, le boîtier 2 comprend une section sensiblement en forme de U avec une base 6 s'étendant suivant l'axe X longitudinal et deux parois 7 latérales s'étendant depuis cette base 3 suivant l'axe vertical Z.

Le boîtier 2 est réalisé dans un matériau métallique ou un alliage métallique. Le matériau métallique peut être un titane ou un acier permettant, d'une part de conférer une bonne tenue aux températures élevées et, d'autre part de résister à la perforation et au cisaillement. Le titane et l'acier sont également des matériaux légers. De manière alternative, le matériau est un alliage métallique à base nickel. Un exemple d'alliage métallique est un Inconel 625 qui présente également de bonnes propriétés de tenue aux températures élevées. De manière avantageuse, mais non limitativement, le boîtier 2 comprend une paroi ayant une épaisseur comprise entre 0,5 et 1,5 mm.

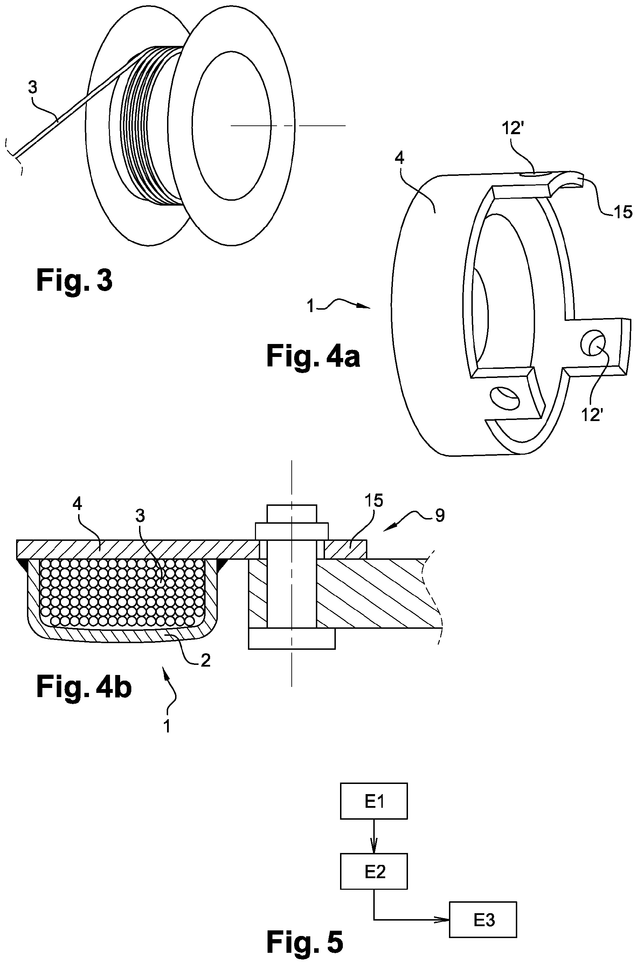

Le fil 3 enroulé dans le boîtier 2 est élaboré à partir d'une pluralité de fibres permettant à la cartouche de blindage de résister aux déformations pour absorber l'énergie de fragments éjectés. Le nombre de fibres composant ce fil est compris entre 1000 et 40000. Chaque fibre présente ici un diamètre compris entre 4 et 8 µm. Le fil 3 enroulé forme des spires de fibres avec une densité importante de fibres. Les spires de fibres sont ainsi serrées les unes aux autres. Le fil 3 est enroulé tel qu'une bobine comme cela est illustré de manière schématique sur la figure 3 pour optimiser le nombre de spires dans un volume minimum. Le fil 3 est enroulé suivant un axe longitudinal. Les fibres sont réalisées dans un matériau polymère ou un matériau composite. Dans le présent exemple les fibres comprennent un polyacrylonitrile (PAN). Les fibres de PAN subissent plusieurs traitements de manière à former le fil de carbone. Les fibres PAN présentent une résistance mécanique en traction élevée compris entre 3000 et 6000 Mpa. Elles présentent également un module élastique élevé compris entre 200 et 600 Gpa selon le traitement permettant d'obtenir ces fibres.

Chaque spire du fil 3 comprend, pour une surface de 1 mm² entre 15000 et 25000 fibres. En d'autres termes, le fil 3 enroulé comprend en section longitudinale entre 15000 et 25000 fibres par mm².

Ainsi, les fibres enroulées peuvent absorber environ dix fois plus d'énergie avec une masse d'environ quatre fois plus faible que les blindages de l'art antérieur.

Le fil 3 comprend deux extrémités opposées qui sont libres dans le boîtier 2. En particulier, les extrémités du fil sont agencées de telles sorte qu'elles ne soient pas fixées au boîtier 2 pour éviter tout effet de délaminage des fibres sur des interfaces potentiels. L'assemblage mécanique du fil 3 de carbone et du boîtier 2 est effectué par le nombre important de spires du fil.

Selon l'invention, aucune matrice à base de résine n'est utilisée pour éviter tout effet de transition vitreuse ou de la capacité thermomécanique d'une matrice dans le temps.

Le couvercle 4 permet de réaliser l'étanchéité du boîtier 2 lorsque celui-ci est fermé. Le couvercle 4 est défini dans un plan sensiblement parallèle à l'axe X longitudinal. Le couvercle 4 est réalisé également dans un matériau métallique ou un alliage métallique. Un tel matériau métallique est un acier ou un titane pour résister au températures élevées. Ces dernières sont d'au moins 500°C. Un alliage métallique est un titane à base nickel. Le couvercle 4 est fixé au boîtier 2 pour maintenir le fil enroulé dans le boîtier 2. La fixation est effectuée à l'aide d'une soudure 5 réalisée, de préférence mais non limitativement, sous vide de manière à isoler les fibres de l'environnement extérieur et en particulier de l'oxydation. Le couvercle 4 présente une épaisseur comprise entre 0,5 et 1,5 mm.

Sur la figure 2 est illustré partiellement un élément 10 de turbomachine suivant une coupe transversale. Cet élément 10 est un carter de turbomachine enveloppant un ou plusieurs rotors de compresseur(s) et/ou turbine(s). Le compresseur ou la turbine comprend des aubes 11 en périphérie d'un disque 13 entrainé en rotation suivant un axe O par un arbre de la turbomachine. Le carter est équipé d'une cartouche de blindage 1 de manière à assurer la rétention des fragments des aubes et/ou du disque entraîné en rotation. La cartouche de blindage 1 est fixée sur le carter via des moyens de fixation 9 tels que des vis, boulons ou autres organes analogues. Les moyens de fixation 9 coopèrent avec le couvercle 4 pour la fixation de la cartouche. Dans cet exemple, le couvercle 4 comprend des portions latérales 14 de sa paroi s'étendant de part et d'autre du boîtier 2 par rapport à l'axe X. En d'autres termes, ces portions de couvercle surplombent les parois latérales 7 du boîtier 2. Elles s'étendent le long de l'axe X. Ces portions de couvercle comprennent des ouvertures 12 par lesquelles sont introduites les moyens de fixation 9 pour la fixation de la cartouche 1 sur le carter. Ces moyens de fixation 9 ne traversent que ces portions de couvercle.

De manière alternative, comme illustré sur les figures 4a et 4b, la cartouche de blindage 1 est fixée sur le carter via des moyens de fixation 9 coopérant également avec le couvercle 4. Ce dernier comprend des extensions latérales 15 de sa paroi suivant l'axe Y. Ces extensions latérales 15 ne s'étendent que d'un côté du couvercle 4 et du boîtier. Celles-ci sont régulièrement réparties sur la périphérie d'un chant du couvercle 4. Le couvercle 4 comprend dans cet exemple trois extensions latérales 15. Chaque extension latérale 15 comprend une ouverture 12' pour recevoir les moyens de fixation 9. Comme l'exemple précédent, les moyens de fixation 9 comprennent des vis, boulons ou autres organes analogues. Les extensions latérales 15 sont fixées sur le carter de la turbomachine via ces moyens de fixation 9. Une fois les extensions latérales fixées, le boîtier 2 contenant le fil 3 enroulé est agencé à distance du carter étant donné que les extensions dépassent d'une paroi latérale du boîtier.

Cette cartouche de blindage 1 est réalisée par un procédé de fabrication simple et peu coûteux. En référence à la figure 5, le procédé comprend une étape E1 d'enroulement du fil 3 de carbone comprenant une pluralité de fibres autour d'un axe longitudinal et une étape E2 d'emprisonnement et de préservation de l'environnement extérieur du fil 3 enroulé dans un boîtier 2. Préalablement à cette étape, une extrémité du fil est maintenue accrochée temporairement afin d'enrouler le fil plus facilement. L'extrémité du fil peut être accrochée temporairement par exemple par un adhésif.

L'étape E2 d'emprisonnement et de préservation comprend une étape E3 de fermeture du boîtier 3 par un couvercle 4 pour garantir l'étanchéité du boîtier. Avant de fermer le boîtier 2 par le couvercle 4, l'extrémité du fil maintenue accrochée dans le boîtier 2 est libérée. L'étape E3 de fermeture est dans le présent exemple réalisée par un soudage sous vide pour éviter l'oxydation du fil 3 de carbone.

## Revendications

1. Procédé de fabrication d'une cartouche de blindage (1) d'un élément (10) de turbomachine, le procédé comprenant une étape (E1) d'enroulement d'un fil (3) de carbone autour d'un axe longitudinal, le fil (3) de carbone comprenant une pluralité de fibres, et une étape d'emprisonnement (E2) et de préservation de l'environnement extérieur du fil (3) enroulé dans un boîtier (2) dans lequel le boîtier est fermé par un couvercle (4), le boîtier et le couvercle étant réalisés dans un matériau métallique ou un alliage métallique, le procédé ne met pas en oeuvre une matrice à base de résine.

2. Procédé de fabrication selon la revendication précédente, **caractérisé en ce que** l'étape (E3) de fermeture du boîtier (2) par le couvercle (4) est réalisée par un soudage sous vide ou sous atmosphère neutre non oxydante.

3. Procédé de fabrication selon l'une quelconque des revendications précédentes, **caractérisé en ce qu'**il comprend une étape dans laquelle une extrémité du fil est maintenue accrochée temporairement afin d'enrouler le fil et une étape dans laquelle l'extrémité du fil maintenue accrochée est libérée avant de fermer le boîtier (2) par le couvercle (4).

4. Cartouche de blindage (1) d'un élément de turbomachine, comprenant un boîtier (2), un fil (3) de carbone enroulé autour d'un axe longitudinal, emprisonné et préservé de l'environnement extérieur dans ledit boîtier (2), et un couvercle (4) fixé au boîtier (2), le fil de carbone comprenant une pluralité de fibres et le boitier (2) et le couvercle (4) étant réalisés dans un matériau métallique ou un alliage métallique, et la cartouche de blindage ne comprend pas de matrice à base de résine.

5. Cartouche de blindage (1) selon la revendication 4, **caractérisée en ce que** les fibres comprennent un matériau polymère ou un matériau composite.

6. Cartouche de blindage (1) selon l'une quelconque des revendications 4 à 5, **caractérisée en ce que** les fibres sont réalisées en polyacrylonitrile.

7. Cartouche de blindage (1) selon l'une quelconque des revendications 4 à 6, **caractérisée en ce que** le fil (3) enroulé comprend en section longitudinale entre 15000 et 25000 fibres par mm².

8. Cartouche de blindage (1) selon l'une quelconque des revendications 4 à 7, **caractérisée en ce que** le fil (3) de carbone comprend deux extrémités libres dans le boîtier (2).

9. Elément (10) de turbomachine, **caractérisé en ce qu'**il comprend une cartouche de blindage (1) selon l'une quelconque des revendications 4 à 8.

## Patentansprüche

1. Verfahren zur Herstellung einer Abschirmungskartusche (1) eines Turbomaschinenelements (10), wobei das Verfahren einen Schritt (E1) des Aufrollens eines Kohlenstoffdrahts (3) um eine Längsachse, wobei der Kohlenstoffdraht (3) eine Vielzahl von Fasern umfasst, und einen Schritt des Einschließens (E2) und des Schutzes vor der äußeren Umgebung des in einem Gehäuse (2) aufgerollten Drahts (3) umfasst, wobei das Gehäuse durch einen Deckel (4) verschlossen wird, wobei das Gehäuse und der Deckel aus einem metallischen Material oder einer Metalllegierung hergestellt sind, wobei das Verfahren keine harzbasierte Matrix einsetzt.

2. Verfahren nach dem vorstehenden Anspruch, **dadurch gekennzeichnet, dass** der Schritt (E3) des Verschließens des Gehäuses (2) durch den Deckel (4) durch ein vakuumdichtes Schweißen oder bei nichtoxidierender neutraler Atmosphäre durchgeführt wird.

3. Verfahren nach einem der vorstehenden Ansprüche, **dadurch gekennzeichnet, dass** es einen Schritt, bei dem ein Ende des Drahts vorübergehend eingehakt gehalten wird, um den Draht aufzurollen, und einen Schritt, bei dem das eingehakt gehaltene Ende des Drahts vor einem Verschließen des Gehäuses (2) durch den Deckel (4) gelöst wird, umfasst.

4. Abschirmungskartusche (1) eines Turbomaschinenelements, umfassend ein Gehäuse (2), einen um eine Längsachse aufgerollten Kohlenstoffdraht (3), der im Gehäuse (2) eingeschlossen und vor der äußeren Umgebung geschützt ist, und einen Deckel (4), der am Gehäuse (2) befestigt ist, wobei der Kohlenstoffdraht eine Vielzahl von Fasern umfasst und das Gehäuse (2) und der Deckel (4) aus einem metallischen Material oder einer Metalllegierung hergestellt sind und die Abschirmungskartusche keine harzbasierte Matrix umfasst.

5. Abschirmungskartusche (1) nach Anspruch 4, **dadurch gekennzeichnet, dass** die Fasern ein Polymermaterial oder ein Verbundmaterial umfassen.

6. Abschirmungskartusche (1) nach einem der Ansprüche 4 bis 5, **dadurch gekennzeichnet, dass** die Fasern aus Polyacrylnitril hergestellt sind.

7. Abschirmungskartusche (1) nach einem der Ansprüche 4 bis 6, **dadurch gekennzeichnet, dass** der aufgerollte Draht (3) im Längsschnitt zwischen 15000 und 25000 Fasern pro mm² umfasst.

8. Abschirmungskartusche (1) nach einem der Ansprüche 4 bis 7, **dadurch gekennzeichnet, dass** der Kohlenstoffdraht (3) zwei freie Enden im Gehäuse (2) umfasst.

9. Turbomaschinenelement (10), **dadurch gekennzeichnet, dass** es eine Abschirmungskartusche (1) nach einem der Ansprüche 4 bis 8 umfasst.

## Claims

1. A method for producing a shielding cartridge (1) of a turbomachine element (10), the method including a step (E1) of winding a carbon wire (3) about a longitudinal axis, the carbon wire (3) including a plurality of fibers, and a step of trapping (E2) and preserving from the outside surroundings of the wound-up wire (3) in a housing (2) in which the housing is closed by a cover (4), the housing and the cover being made of a metallic material or a metallic alloy, the method does not implement a resin-based matrix.

2. The method for producing according to the preceding claim, **characterized in that** the step (E3) of closing the housing (2) by the cover (4) is carried out by welding under vacuum or under neutral non-oxidizing atmosphere.

3. The method for producing according to one of the preceding claims, **characterized in that** the method comprises a step in which end of the wire is temporarily kept fastened so as to wind the wire and a step in which the end of the wire kept fastened is freed before closing the housing (2) by the cover (4).

4. A shielding cartridge (1) of a turbomachine element, including a housing (2), a carbon wire (3) wound-up around a longitudinal axis, trapped and preserved from the outside surroundings in said housing (2), and a cover (4) fixed to the housing (2), the carbon wire including a plurality of fibers and the housing (2) and the cover (4) being made of a metallic material or a metallic alloy, and the shielding cartridge does not comprise a resin-based matrix .

5. The shielding cartridge (1) according to claim 4, **characterized in that** the fibers include a polymeric material or a composite material.

6. The shielding cartridge (1) according to any one of claims 4 to 5, **characterized in that** the fibers are made of polyacrylonitrile.

7. The shielding cartridge (1) according to any one of claims 4 to 6, **characterized in that** the wound-up wire (3) includes in its longitudinal section between 15,000 and 25,000 fibers per mm².

8. The shielding cartridge (1) according to any one of claims 4 to 7, **characterized in that** the carbon wire (3) includes two free ends in the housing (2).

9. A turbomachine element (10), **characterized in that** it includes a shielding cartridge (1) according to any one of claims 4 to 8.
